# FASCICULE DE BREVET EUROPEEN

(11) **EP 3 078 436 B1**
(45) Date de publication et mention de la délivrance du brevet: **12.06.2024**
(21) Numéro de dépôt: 16164515.5
(22) Date de dépôt: 08.04.2016
(51) Int. Cl.: B22F 10/25, B22F 3/03, B22F 3/04, B22F 3/08, B22F 5/08, G04B 17/06, G04B 47/04, C23C 24/04, B22F 3/00, B22F 7/06

(54) **PROCÉDÉ DE FABRICATION D'UN COMPOSANT HORLOGER**
VERFAHREN ZUR HERSTELLUNG EINER UHRKOMPONENTE
METHOD FOR MANUFACTURING A CLOCK COMPONENT

(30) Priorité: 10.04.2015 CH 5012015
(43) Date de publication de la demande: 12.10.2016
(73) Titulaire: RICHEMONT INTERNATIONAL SA, 1752 Villars-sur-Glâne (CH)
(72) Inventeur: STUER, Michael, 2000 Neuchâtel (CH)
(74) Mandataire: P&TS SA (AG, Ltd.)

(56) Documents cités:
- EP-A1- 1 225 477
- EP-A1- 2 405 300
- EP-A1- 2 485 095
- EP-A1- 2 502 877
- EP-A2- 2 752 261
- WO-A1-2014/116254
- WO-A2-2015/158631
- CH-A2- 706 838
- CH-A2- 707 326
- US-A1- 2010 290 319
- A. MORIDI ET AL: "Cold spray coating: review of material systems and future perspectives", SURFACE ENGINEERING., vol. 30, no. 6, 16 April 2014 (2014-04-16) , pages 369-395, XP055327752, GB ISSN: 0267-0844, DOI: 10.1179/1743294414Y.0000000270

## Description

### Domaine technique

La présente invention concerne un procédé de fabrication d'un composant horloger permettant un contrôle serré des tolérances dimensions fonctionnelles du composant. L'invention concerne également le composant ainsi obtenu.

### Etat de la technique

Parmi les procédés de fabrication de composants horlogers, il existe des procédés par photolithographie UV et dépôt galvanique, par exemple basés sur la technologie LIGA-UV. Ce procédé permet la fabrication de microstructures métalliques de haute précision.

Le document EP0468467 divulgue un procédé de production d'une pièce de précision en fer ou alliage de fer, la pièce étant formée d'un corps fritté obtenu par moulage de poudre, ledit procédé comportant les étapes consistant à former un mélange homogène constitué essentiellement de poudre de fer ou d'alliage de fer et d'un liant organique, à façonner le mélange en un corps moulé de forme prescrite, à enlever sous une atmosphère inerte le liant organique du corps moulé, à réduire ladite poudre de fer ou d'alliage de fer que contient le corps moulé pour en retirer l'oxygène, à former un corps moulé réduit et à fritter le corps moulé réduit. Dans le procédé décrit, le moulage est réalisé par moulage par injection et seules des pièces de fer sont fabriquées.

Le document EP2579104 décrit un procédé de réalisation d'une pièce d'horlogerie composite comprenant une première couche métallique et une deuxième couche à base de silicium par microfabrication et assemblage.

Le document EP2752261 divulgue un procédé de production d'une partie de montre comprenant les étapes de: fournir un moule dont la forme du moule correspond au négatif des contours de la partie de montre; pulvériser un matériau de la pièce dans le moule; et séparer le moule de la partie de montre.

Les procédés ci-dessus ne permettent pas d'obtenir un contrôle suffisamment serré des tolérances dimensions fonctionnelles du composant.

### Bref résumé de l'invention

L'invention concerne un procédé de fabrication d'un composant horloger comprenant:
fournir un substrat, un dispositif de déposition pour déposer au moins un matériau sur le substrat, et des moyens de structuration choisis parmi un moule et/ou un masque, ou un traitement de surface, permettant déposer ledit au moins un matériau de manière sélective sur le substrat;
à l'aide du dispositif de déposition et des moyens de structuration, projeter ledit au moins un matériau pour former un dépôt structuré sur le substrat; et
séparer le dépôt structuré du substrat de sorte à obtenir le composant horloger;
dans lequel l'étape de projeter est réalisée par le procédé de projection par aérosol à froid de particules « Aerosol Déposition Method (ADM) » réalisée à la température de la pièce sans traitement thermique, dudit au moins un matériau; et dans lequel le dépôt a une épaisseur d'au moins 100 µm.

Dans une variante privilégiée, le dépôt a une épaisseur d'au moins 150 µm, et de préférence d'au moins 200 µm. Selon un exemple, l'épaisseur est entre 250 µm et 1000 µm.

Le document EP1225477 décrit une méthode de fabrication d'une pièce métallique comportant une empreinte comprenant les étapes d'irradiation à travers d'un premier photomasque d'une première couche de photorésist, de polymérisation de la première couche de photorésist et élimination de la couche de photorésist non irradiée, d'irradiation à travers un deuxième photomasque, de polymérisation de la deuxième couche de photorésist et élimination de la couche de photorésist non irradiée, de dépôt d'un couche métallique d'une épaisseur correspondant au composant à réaliser par électro-formage sur le substrat conducteur, et de séparation de la partie métallique du substrat et élimination du photorésist.

Le document EP2405300 décrit une méthode de fabrication de pièces métalliques comportant au moins deux niveaux obtenus par photolithographie et électroformage.

Les procédés ci-dessus ne permettent pas d'obtenir un contrôle suffisamment serré des tolérances dimensions fonctionnelles du composant.

### Bref résumé de l'invention

L'invention concerne un procédé de fabrication d'un composant horloger comme étant définit par la revendication indépendante annexée.

Dans une variante privilégiée, le dépôt a une épaisseur d'au moins 150 µm, et de préférence d'au moins 200 µm. Selon un exemple, l'épaisseur est entre 250 µm et 1000 µm.

Dans un mode de réalisation, les moyens de structuration comprennent un moule doté d'une forme précise de moule sur une surface intérieure correspondant aux contours négatifs du composant horloger devant être produit.

Dans un autre mode de réalisation, les moyens de structuration comprennent un traitement de surface recouvrant au moins une portion du substrat.

Encore dans un autre mode de réalisation, les moyens de structuration comprennent un masque placé entre le dispositif de déposition et le substrat, le masque laissant passer de manière sélective ledit au moins un matériau projeté.

Encore dans un autre mode de réalisation, ledit au moins un matériau comprend un premier matériau et un second matériau différent du premier matériau.

Etant donné que le procédé de projection de l'invention est un procédé "froid", il permet un contrôle très serré des tolérances dimensions fonctionnelles du composant. Il permet également de réduire les coûts de fabrication de composants horlogers. D'autres avantages ressortiront des exemples de mise en oeuvre de l'invention indiqués dans la description détaillée.

### Brève description des figures

Des exemples de mise en oeuvre de l'invention sont indiqués dans la description illustrée par les figures annexées dans lesquelles:
la figure 1 illustre de façon schématique un dispositif de déposition par projection par aérosol d'un matériau sur un substrat, selon un mode de réalisation;
la figure 2 représente un substrat avec un moule doté d'une forme précise, selon un mode de réalisation;
la figure 3 représente un substrat avec un moule avec des contre-dépouilles, selon un mode de réalisation;
la figure 4 illustre un masque disposé entre une buse et un substrat, selon un mode de réalisation;
la figure 5 représente un traitement de surface appliqué sur au moins une portion du substrat, selon un mode de réalisation;
la figure 6 montre un dépôt composite, selon un mode de réalisation;
la figure 7 montre un dépôt composite, selon un autre mode de réalisation;
la figure 8 illustre une couche intermédiaire entre deux dépôts, selon un mode de réalisation;
la figure 9 illustre un dépôt comprenant des inclusions, selon un mode de réalisation;
la figure 10 illustre un dépôt comprenant un gradient de composition, selon un mode de réalisation;
la figure 11 illustre un dépôt comprenant des inclusions, selon un autre mode de réalisation;
la figure 12 représente un dépôt comprenant une texture, selon un mode de réalisation;
les figures 13 et 14 illustrent une vue en coupe d'un balancier d'un organe de régulation d'une montre, fabriqué par le procédé de fabrication selon l'invention;
la figure 15 monte un jeu de masques comprenant des marques d'alignement, selon un mode de réalisation; et
la figure 16 représente un dépôt comprenant une texture, selon un autre mode de réalisation.

### Exemple(s) de mode de réalisation de l'invention

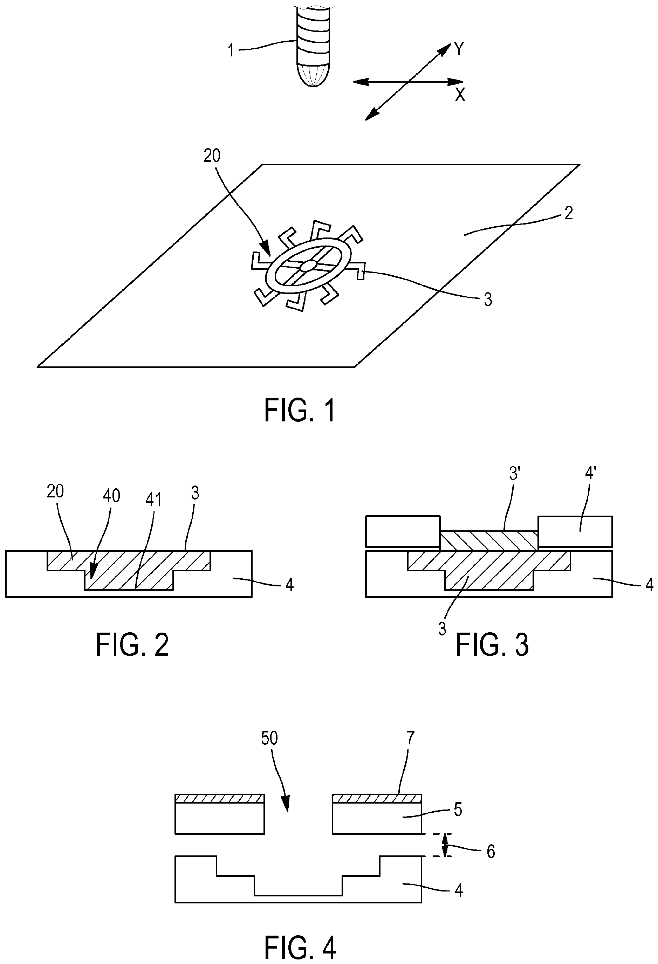

La figure 1 illustre de façon schématique un dispositif de déposition d'un matériau sur un substrat 2 par un procédé de projection par aérosol, également connu en anglais sous l'expression "Aerosol Déposition Method" (ADM). Dans la figure 1, seule une buse 1 est visible du dispositif de projection par aérosol. On comprendra cependant que le dispositif inclut également une chambre d'aérosol qui contient les particules à déposer, un dispositif d'alimentation en gaz qui permet d'injecter le gaz dans la chambre en vue de le mélanger aux particules et de former ainsi l'aérosol. Le dispositif inclut également une chambre de dépôt où se trouve la buse 1 et le substrat 1. Le substrat 2 peut être maintenu par un support (non représenté) qui est mobile en translation dans la chambre, permettant ainsi de déplacer le substrat 2 par rapport à la buse 1. De façon alternative, ou en combinaison, la buse 1 peut également être mobile en translation (illustré par les directions X et Y dans la figure 1.

Les particules du ou des matériaux à déposer et contenus dans l'aérosol sont accélérés par la buse 1 et traversent l'espace séparant la sortie de la buse 1 du substrat 2 avec une énergie cinétique élevée. En entrant en contact avec le substrat 2, les particules se fragmentent et forment localement un dépôt cohésif. Cette cohésion est directement induite par l'énergie libérée au moment de l'impact sans qu'il soit nécessaire de procéder ensuite à un frittage. Ainsi, en déplaçant le substrat 2 par rapport à la buse 1, et/ou en déplaçant buse 1 par rapport au substrat 2, on forme un dépôt à la surface du substrat 2 sans qu'un traitement thermique ne soit requis.

Le procédé de projection par aérosol utilisé ici diffère du procédé de pulvérisation thermique décrit dans EP2752261 qui nécessitent une fusion, au moins partielle, des particules pour créer la cohésion dans le dépôt. En effet, dans la pulvérisation thermique un gaz vecteur sert à accélérer et transporter jusqu'au substrat les particules, chauffe les particules jusqu'au point de fusion.

Selon un mode de réalisation, un procédé de fabrication d'un composant horloger 20 comprenant les étapes de:
fournir la substrat 2, le dispositif de de projection par aérosol;
à l'aide dispositif de projection, projeter (ou pulvériser) le matériau pour former un dépôt 3 structuré sur le substrat 2; et
séparer le dépôt 3 structuré du substrat 2 de manière à obtenir le composant horloger 20.

L'objectif du procédé étant de fabriquer des composants horlogers, les dépôts réalisés par le procédé ci-dessus ont une épaisseur qui doit être typiquement d'au moins 100 µm et préférablement entre 250 µm et 1000 µm. Le dépôt 3 doit également être déposé sur le substrat 2 de manière sélective de manière à obtenir des composants qui peuvent comprendre une forme plus ou moins complexe. A cette fin, des moyens de structuration sont prévus afin de réaliser le dépôt de manière sélective sur le substrat 2 et en trois dimensions.

Selon une forme d'exécution illustrée à la figure 4, les moyens de structuration comprennent un masque 5 disposé entre la buse 1 et le substrat 2. Le masque 5 comprend des ouvertures 50 définissant le motif souhaité. Le masque 5 peut être placé à une certaine distance 6 du substrat 2 comme dans la figure 4. Alternativement, la distance entre le masque 5 et le substrat 2 peut être sensiblement nulle. Dans ce dernier cas, le masque 5 agit effectivement comme un moule (ou comme un stencil).

La surface du masque 5 qui est exposée au jet de particules peut comporter un traitement de surface 7 permettant d'éviter l'adhésion des particules sur cette surface.

Selon une autre forme d'exécution illustrée aux figures 2 et 3, les moyens de structuration comprennent un moule 4 doté d'une forme précise 40 de moule sur une surface intérieure 41, la forme précise 40 du moule 4 correspondant aux contours négatifs de la pièce d'horlogerie 20 qui doit être produite. Dans l'exemple particulier de la figure 2 le moule 4 comporte deux niveaux, permettant de fabriquer un composant 20 tridimensionnel, par exemple une roue dentée avec pignon.

Le matériau est projeté dans le moule 4. Le dépôt formé lors de l'étape de projection dans le moule 4 correspond au remplissage du moule 4 avec le ou les matériaux projetés. Dans le cas du moule à deux niveaux de la figure 2, le dépôt 3 peut être formé en deux étapes de manière à remplir successivement le premier et le second niveau. On peut évidemment former le dépôt d'une seule étape de projection pour remplir les deux niveaux du moule 4.

Avant la projection, une première couche de pulvérisation (non représentée) peut être appliquée à la surface intérieure 41. Dans ce cas, la première couche de pulvérisation correspond à la surface de la future pièce d'horlogerie 20 et présente avantageusement une haute qualité et de hautes performances en termes de dureté et de résistance à l'usure et à l'abrasion.

L'excédent de matériau qui pourrait être présent à la surface extérieure du moule 4 ou dépasser le niveau de remplissage peut-être éliminé dans une étape ultérieure, par exemple par meulage ou par abrasion. Cette étape de planarisation (ou polissage) peut être réalisée à un stade auquel le composant 20 est toujours présent dans le moule 4 et est donc maintenu mécaniquement et stabilisée par le moule 4.

Le dépôt 3 ainsi formé peut alors être séparé du moule 4 et substrat 2 de manière à obtenir le composant horloger 20.

Dans une variante de réalisation montrée à la figure 3, le moule 4 présente des contre-dépouilles. Dans l'exemple illustré, la contre-dépouille est obtenue en disposant d'un troisième niveau de moule 4' sur le premier moule 4 à deux niveaux, l'ouverture du troisième niveau de moule 4' étant plus petite que celle du deuxième niveau. Le composant 20 est préférablement fabriqué en formant un premier dépôt 3 dans le premier moule 4 à deux niveaux, le troisième niveau de moule 4' est alors appliqué sur le premier moule 4 et un second dépôt 3' est formé dans ce troisième niveau de moule 4'. Une étape de planarisation peut être effectuée avant l'application du troisième niveau de moule 4'.

Dans le cas d'un moule 4 présentant des contre-dépouilles, il peut être avantageux que la buse 1 et le moule 4 puissent se déplacer l'un par rapport à l'autre, par exemple dans un déplacement de renversement. Le renversement de la buse 1 et/ou du moule 4 garantit que les parties en contre-dépouille du moule puissent être revêtues par le matériau pulvérisé 3 et que la forme précise 40 du moule puisse être reproduite.

On comprendra que le moule 4, 4' peut être réalisé de sorte à comprendre plus d'une forme moulée 40. Par exemple le moule peut comprendre une pluralité de formes moulées 40 de sorte qu'une pluralité de composants d'horlogerie 20 peuvent être fabriquées avec un seul moule 4, 4'.

Encore selon la forme d'exécution illustrée à la figure 4, un masque 5, disposé entre la buse 1 et le substrat 2, peut être utilisé en combinaison avec un moule 4. De la sorte, des dépôts de formes encore plus complexes peuvent être formés. Par exemple, la structure correspondant au second dépôt de l'exemple de la figure 3 peut être formée sur le deuxième par projection sélective au travers d'un masque 5.

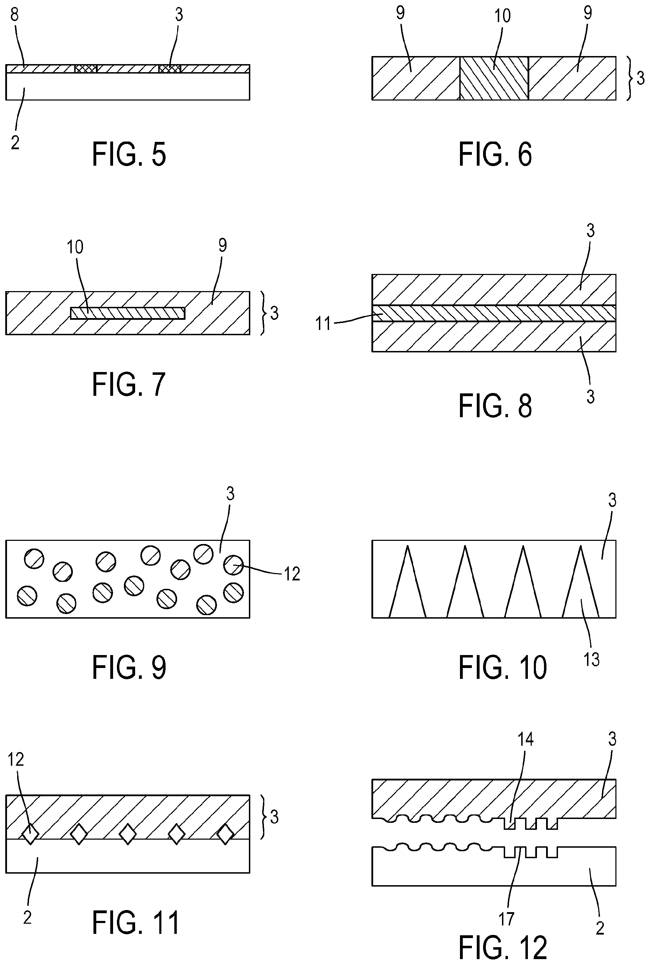

Selon un autre mode de réalisation illustré à la figure 5, les moyens de structuration comprennent un traitement de surface 8 appliqué sur au moins une portion du substrat de manière à créer une structuration de surface. Le traitement de surface 8 est arrangé pour créer un motif traité à la surface du substrat 2 sur lequel les particules ne peuvent adhérer, et un contre motif non traité dans lequel les particules peuvent adhérer au substrat 2 et former le dépôt 3. Un tel traitement de surface 8 peut par exemple prendre la forme d'un négatif d'une pièce horlogère à produire. L'épaisseur du traitement de surface 8 peut-être beaucoup plus faible que le dépôt 3 à déposer. Dans ce cas, les propriétés surfaciques du traitement de surface 8 peuvent être importantes dans la formation du dépôt 3 structuré. Une épaisseur du traitement de surface 8 de l'ordre de celle du dépôt 3 à former, ou même plus grande, peut être cependant aussi considérée.

Les particules projetées peuvent comprendre tout type de particules ou poudres compatibles avec le procédé décrit ici et adapté à la fabrication du composant horloger 20. Par exemple, des poudres métalliques ou céramiques peuvent être envisagées. Les particules projetées peuvent également comprendre plus d'un seul matériau. Par exemple, des mélanges de poudres métalliques et de poudres céramiques peuvent être projetés sur le substrat 2 structuré.

L'un des matériaux peut comprendre une alumine ou un spinelle ou l'un de Ti₂AlN, Sc₂InC, Ti₂InC, Ti₂SnC, Zr₂InC, Zr₂TlN, Zr₂InN, Nb₂SnC, Hf₂SnC, Hf₂SnN, Hf₂SC, Ti₃AlC₂, Ti₃SiC₂, Ti₄AlN₃, Ta₄AlC₃, Nb₄AlC₃.

L'un des matériaux peut également comprendre un grenat d'yttrium et d'aluminium (YAG) ou l'un de: zircone, carbure de silicium, nitrure de silicium, polytétra-fluoroéthylène, dioxyde de titane, carbure de titane, nitrure de titane, TiCN, silice, verre, acier, or, laiton, bronze, platine, iridium, ou argent.

Encore selon une variante, le mélange de matériaux peut comprendre un matériau inorganique comme un métal ou une céramique avec un matériau organique.

Selon un mode de réalisation montré à la figure 6, un dépôt composite peut être réalisé de manière à comprendre une première portion 9 du dépôt réalisée dans un premier matériau et une seconde portion 10 du dépôt réalisée dans un second matériau. Les deux portions 9, 10 de dépôt de matériaux différents peuvent être formées, par exemple, par utilisation de masques spécifiques pour chacun des matériaux, ou encore de moules spécifiques pour la projection de chacun des matériaux, les moules étant appliqués sur le substrat et enlevés successivement pour chacun des dépôts de matériaux différents.

La figure 7 montre un autre exemple d'un dépôt comportant une seconde portion de dépôt 10 comprenant un second matériau logé dans une première portion de dépôt 9 comprenant le premier matériau.

Le premier et second matériau 9, 10 peuvent se distinguer par la couleur la transparence et/ou par la composition.

Dans une variante illustrée à la figure 9, le second matériau 10 comprend des inclusions 12 métalliques, céramiques ou organiques, comprises à l'intérieur d'une matrice métallique, céramique, ou autre.

Dans une autre variante, le second matériau 10 peut comprendre des inclusions 12 telles que des pierres précieuses (figure 11). Les inclusions peuvent être logées à la surface du substrat 2. Les inclusions seront donc affleurant à la surface du composant 20 une fois le dépôt 3 séparé du substrat 2. Les inclusions 12 peuvent également être logées à l'intérieure de la matrice formée par le premier matériau. Le procédé de déposition de l'invention permet d'obtenir une bonne liaison mécanique entre les inclusions (pierres) et la matrice.

Encore dans un autre mode de réalisation, le dépôt est formé de manière à ce qu'il comprenne un matériau ayant un gradient de composition. La figure 10 illustre un tel dépôt 3 comprenant un gradient de composition 13.

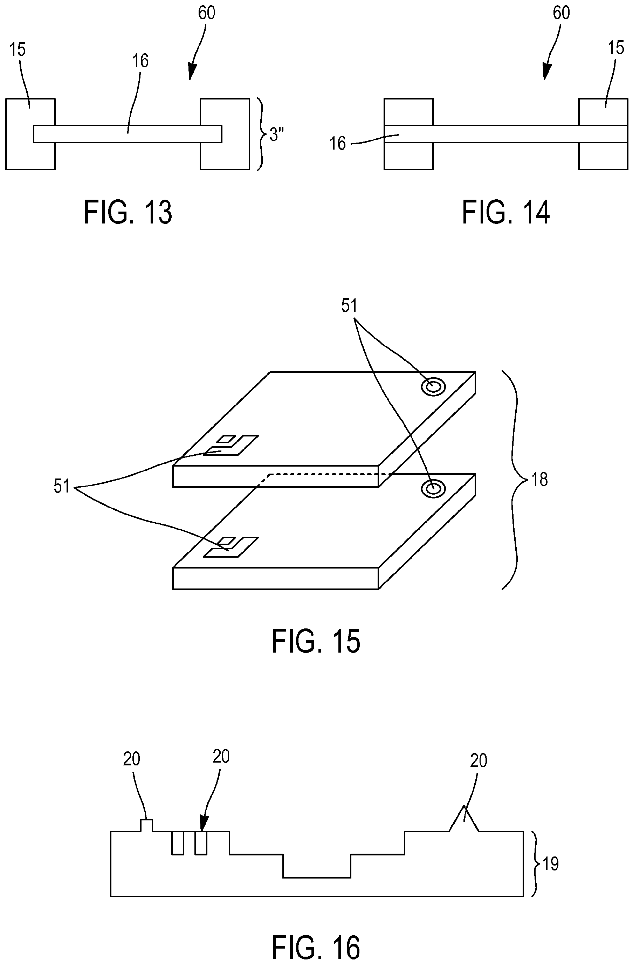

D'autres variantes pour la formation du dépôt 3 sont également possibles. Dans l'exemple illustré à la figure 12, le dépôt comprend une texture 14. Cette texture 14 peut être obtenue lors de la formation du dépôt 3 sur un substrat 2 comprend lui-même une texture 17 inverse à la texture 14 que l'on souhaite obtenir sur le dépôt 3. La texture 14, 17 peut correspondre à des indicateurs d'épaisseur 19 (figure 16) permettant où une étape de meulage et/ou polissage doit être réalisée sur le composant 20 avant sont extraction du substrat 2.

Les figures 13 et 14 illustrent une vue en coupe d'un balancier 60 d'un organe de régulation d'une montre, fabriqué par le procédé de fabrication selon l'invention. Dans ce cas, la serge 15 est déposée dans un matériau, par exemple en métal, qui diffère de celui avec lequel sont déposés les bras 16, par exemple une céramique (ou un autre métal). L'épaisseur de la serge 15 peut également être différente que celle des bras 16. La déposition de la serge 15 dans un premier matériau et les bras 16 dans un second matériau peut être réalisée par l'utilisation de deux masques 18 (voir la figure 15), chaque masque étant dédié à la déposition de la serge et des bras et comprenant un ou des marques d'alignement 51.

Etant donné que le procédé de projection par aérosol est un procédé "froid", c'est-à-dire réalisé à la température de la pièce, l'utilisation d'un moule 4 ou d'un masque 5 permet un contrôle très serré des tolérances dimensions fonctionnelles du composant 20 produit par la méthode de projection. Ceci est un grand avantage dans le cas de la fabrication de composants horlogers. Le contrôle serré des tolérances dimensions fonctionnelles est dû à l'absence de contraintes thermomécaniques qui induisent des déformations et des retraits du dépôt suite au refroidissement du dépôt, dans le cas où un procédé thermique de déposition est utilisé. Le même jeu de moules, masques et/ou traitement de surface peut être utilisé, indépendamment de la nature du matériau déposé, avec les mêmes tolérances dimensions et précision. Le présent procédé permet donc de réduire les coûts de fabrication de composants horlogers.

Le procédé de projection de l'invention permet en outre la fabrication de composants horlogers à partir de matériaux composites sont les matériaux individuels sont incompatibles lorsque procédés par les méthodes de déposition conventionnelles thermiques. Par exemple, dans le cas d'un procédé de déposition thermique, un matériau organique ne pourrait pas être déposé avec un matériau métallique ou céramique sans risquer d'être détruit lors de l'étape de frittage (pour les céramiques).

L'avantage de pouvoir intégrer des matériaux organiques à un matériau métallique ou céramique permet, par exemple, d'améliorer les propriétés telles que la résistance au choc, la résistance à l'usure et tribologiques du composant 20.

Comme le présent procédé est destiné à la fabrication de composants horlogers, il est important de pourvoir croître des dépôts ayant une épaisseur supérieure à 100 µm, de préférence supérieure 200 µm et, plus préférablement ayant une épaisseur comprise entre 250 µm et 1000 µm.

De telles épaisseurs peuvent être obtenues en changeant la composition du matériau étant déposé de manière graduelle. Le changement peut être continu ou discontinu, par exemple, par l'application de dépôts intermédiaires qui améliorent la fenêtre de procédé entre l'érosion et la déposition pendant le dépôt par projection par aérosol. Par exemple ces dépôts intermédiaires peuvent être plus ductiles ou permettre une adhésion améliorée avec les particules. La figure 8 illustre une telle couche intermédiaire 11 entre deux dépôts 3. De telles épaisseurs peuvent être obtenues en changeant les paramètres du procédé pendant la déposition, sur la base de l'épaisseur de la couche déposée.

En particulier, la taille des particules du matériau déposé peut être modifiée en changeant la distribution des particules dans le générateur d'aérosol. La taille des particules peut également être modifiée en augmentant ou diminuant la fracture des particules, par exemple, en provoquant des collisions entre les particules avant que ces dernières impactent le substrat 2 (voir la demande de brevet JP2008045191A). La modification de la taille des particules du matériau déposé peut être combinée avec l'utilisation de particules ayant des contraintes internes.

L'utilisation de collisions entre les particules pour obtenir des épaisseurs de dépôt plus importantes requiert un contrôle sévère des paramètres du procédé et une connaissance approfondie du système du matériau déposé. Des paramètres du procédé autres que l'angle solide de la projection de particules peuvent comprendre: le type de gaz porteur, la vitesse de balayage de la buse 1, le flux de gaz porteur, les propriétés des poudres de particules (distribution de taille, forme, contraintes internes, etc.), la distance entre le substrat 2 et la buse 1, la distance entre le substrat 2 et le masque 5, la distance entre la buse 1 et le masque 5, la pression différentielle, le niveau de vibration (fréquence, amplitude), et la forme de la buse 1.

### Numéros de référence employés sur les figures

- 1: buse
- 2: substrat
- 3: dépôt, premier dépôt
- 3': second dépôt
- 3": composant horloger avec deux matériaux différents
- 4: moule
- 4': troisième niveau de moule
- 5: masque
- 6: distance entre le masque et le substrat
- 7: traitement de surface du masque
- 8: traitement de surface du substrat
- 9: première portion du dépôt
- 10: second portion du dépôt
- 11: couche intermédiaire
- 12: inclusions
- 13: gradient de composition
- 14: textures du dépôt
- 15: serge
- 16: bras
- 17: textures du substrat
- 18: jeu de masques avec alignement
- 19: indicateurs d'épaisseur
- 20: composant horloger
- 40: forme du moule
- 41: surface intérieure du moule
- 50: ouverture
- 51: marque d'alignement
- 60: balancier

## Revendications

1. Procédé de fabrication d'un composant horloger (3) comprenant
fournir un substrat (2), un dispositif de déposition (1) pour déposer au moins un matériau (9) sur le substrat (2), et des moyens de structuration (4, 5) choisis parmi un moule (4) et/ou un masque (5), ou un traitement de surface, permettant déposer ledit au moins un matériau (9) de manière sélective sur le substrat (2);
à l'aide du dispositif de déposition (1) et des moyens de structuration (4, 5), projeter ledit au moins un matériau pour former un dépôt (3) structuré sur le substrat (2); et
séparer le dépôt (3) structuré du substrat (2) de sorte à obtenir le composant horloger (20);
**caractérisé en ce que**
l'étape de projeter est réalisée par le procédé de projection par aérosol à froid de particules « Aerosol Déposition Method (ADM) »,
réalisée à la température de la pièce et sans traitement thermique, dudit au moins un matériau (9); et
dans lequel le dépôt a une épaisseur d'au moins 100 µm.

2. Le procédé selon la revendication 1,
dans lequel le dépôt a une épaisseur d'au moins 200 µm.

3. Le procédé selon la revendication 1
dans lequel le dépôt a une épaisseur entre 250 µm et 1000 µm.

4. Le procédé selon l'une des revendications 1 à 3,
dans lequel les moyens de structuration comprennent un moule (4) pouvant comporter un ou au moins deux niveaux, le moule (4) étant doté d'une forme (40) de moule sur une surface intérieure (41), la forme (40) du moule correspondant aux contours négatifs du composant horloger (20) devant être produit.

5. Le procédé selon la revendication 4,
dans lequel le moule (4) présente une contre-dépouille, la contre-dépouille étant obtenue en disposant un troisième niveau de moule (4') sur le premier moule (4); et
dans lequel le composant (20) est fabriqué en formant un premier dépôt (3) dans le premier moule (4), en appliquant le troisième niveau de moule (4') sur le premier moule (4), et en formant un second dépôt (3') dans le troisième niveau de moule (4').

6. Le procédé selon l'une des revendications 1 à 3,
dans lequel les moyens de structuration comprennent un traitement de surface (8) recouvrant au moins une portion du substrat (2), le matériau (9) projeté n'adhérant pas sur le traitement de surface (8).

7. Le procédé selon l'une des revendications 1 à 6,
dans lequel les moyens de structuration comprennent un masque (5) placé entre le dispositif de déposition (1) et le substrat (2), le masque (5) laissant passer de manière sélective ledit au moins un matériau (9) projeté.

8. Le procédé selon la revendication 7,
dans lequel la surface du masque (5) qui est exposée au matériau (9) projeté comporte un traitement de surface (7) sur lequel le matériau (9) projeté n'adhère pas.

9. Le procédé selon la revendication 7 ou 8 et la revendication 4 ou 5,
dans lequel le masque (5) est utilisé en combinaison avec le moule (4) ou en combinaison avec un traitement de surface (8) selon la revendication 6.

10. Le procédé selon l'une des revendications 1 à 9,
dans lequel ledit au moins un matériau comprend un premier matériau (9) tel qu'une céramique et un second matériau (10) tel qu'une poudre métallique, différent du premier matériau (9).

11. Le procédé selon la revendication 10,
dans lequel un dépôt (3) est formé de manière à ce qu'une portion du dépôt comprend le premier matériau (9) et une seconde portion du dépôt comprend le second matériau (10).

12. Le procédé selon la revendication 10 ou 11,
dans lequel le premier matériau (9) ou le second matériau (10) comprend une alumine ou un spinelle ou l'un de Ti₂AlN, Sc₂InC, Ti₂InC, Ti₂SnC, Zr₂InC, Zr₂TlN, Zr₂InN, Nb₂SnC, Hf₂SnC, Hf₂SnN, Hf₂SC, Ti₃AlC₂, Ti₃SiC₂, Ti₄AlN₃, Ta₄AlC₃, Nb₄AlC₃, ou encore l'un de YAG, zircone, carbure de silicium, nitrure de silicium, polytétra-fluoroéthylène, dioxyde de titane, carbure de titane, nitrure de titane, TiCN, silice, verre, acier, or, laiton, bronze, platine, iridium, ou argent, ou encore une céramique transparente ou colorée et/ou une céramique opaque ou translucide.

13. Le procédé selon l'une des revendications 10 à 12,
dans lequel le second matériau (10) comprend un matériau organique ou des inclusions métallique, céramique, organiques, ou encore des pierres précieuses.

14. Le procédé selon l'une des revendications 1 à 13,
dans lequel le dépôt (3) est formé de manière à ce qu'au moins un matériau comprend un gradient de composition.

15. Le procédé selon l'une des revendications 1 à 14,
dans lequel le dépôt (3) comprend une texture (14).

16. Le procédé selon la revendication 15,
dans lequel la texture correspond à des indicateurs d'épaisseur (19).

17. Le procédé selon l'une des revendications 1 à 16,
dans lequel la projection est réalisée en changeant la composition dudit au moins un matériau de manière continue ou discontinue.

18. Le procédé selon l'une des revendications 1 à 17,
dans lequel la projection est réalisée de manière à provoquer des collisions entre les particules avant que ces dernières impactent le substrat (2).

19. Le procédé selon l'une des revendications 1 à 17,
dans lequel le composant est un balancier (60).

## Patentansprüche

1. Verfahren zur Herstellung einer Uhrenkomponente (3), umfassend:
Bereitstellen eines Substrats (2), einer Abscheidungsvorrichtung (1) zum Abscheiden mindestens eines Materials (9) auf dem Substrat (2) und von Strukturierungsmitteln (4, 5), die aus einer Form (4) und/oder einer Maske (5) ausgewählt sind, oder einer Oberflächenbehandlung, die es ermöglicht, das mindestens eine Material (9) selektiv auf dem Substrat (2) abzuscheiden;
Spritzen des mindestens einen Materials mit Hilfe der Abscheidungsvorrichtung (1) und der Strukturierungsmittel (4, 5), um eine strukturierte Abscheidung (3) auf dem Substrat (2) auszubilden; und Trennen der strukturierten Abscheidung (3) vom Substrat (2), um die Uhrenkomponente (20) zu erhalten; **dadurch gekennzeichnet, dass**
der Spritzschritt durch das Aerosol-Partikel-Kaltspritzverfahren "Aerosol Deposition Method (ADM)" erfolgt, das bei Raumtemperatur und ohne Wärmebehandlung des mindestens einen Materials (9) durchgeführt wird; und wobei die Abscheidung eine Dicke von mindestens 100 µm aufweist.

2. Verfahren nach Anspruch 1,
wobei die Abscheidung eine Dicke von mindestens 200 µm aufweist.

3. Verfahren nach Anspruch 1,
wobei die Abscheidung eine Dicke zwischen 250 µm und 1.000 µm aufweist.

4. Verfahren nach einem der Ansprüche 1 bis 3,
wobei die Strukturierungsmittel eine Form (4) umfassen, die eine oder mindestens zwei Ebenen aufweisen kann, wobei die Form (4) an einer Innenfläche (41) mit einer Formform (40) versehen ist, wobei die Formform (40) den Negativkonturen der herzustellenden Uhrenkomponente (20) entspricht.

5. Verfahren nach Anspruch 4,
wobei die Form (4) eine Hinterschneidung aufweist, wobei die Hinterschneidung durch Anordnen einer dritten Formebene (4') auf der ersten Form (4) erhalten wird; und wobei die Komponente (20) durch Ausbilden einer ersten Abscheidung (3) in der ersten Form (4), durch Anordnen der dritten Formebene (4') auf der ersten Form (4) und durch Ausbilden einer zweiten Abscheidung (3') in der dritten Formebene (4') hergestellt wird.

6. Verfahren nach einem der Ansprüche 1 bis 3,
wobei die Strukturierungsmittel eine Oberflächenbehandlung (8) umfassen, die mindestens einen Teil des Substrats (2) bedeckt, wobei das gespritzte Material (9) nicht auf der Oberflächenbehandlung (8) haftet.

7. Verfahren nach einem der Ansprüche 1 bis 6,
wobei die Strukturierungsmittel eine Maske (5) umfassen, die zwischen der Abscheidungsvorrichtung (1) und dem Substrat (2) angeordnet ist, wobei die Maske (5) das mindestens eine gespritzte Material (9) selektiv durchlässt.

8. Verfahren nach Anspruch 7,
wobei die Oberfläche der Maske (5), die dem gespritzten Material (9) ausgesetzt ist, eine Oberflächenbehandlung (7) aufweist, auf der das gespritzte Material (9) nicht haftet.

9. Verfahren nach Anspruch 7 oder 8 und Anspruch 4 oder 5,
wobei die Maske (5) in Kombination mit der Form (4) oder in Kombination mit einer Oberflächenbehandlung (8) nach Anspruch 6 verwendet wird.

10. Verfahren nach einem der Ansprüche 1 bis 9,
wobei das mindestens eine Material ein erstes Material (9) wie eine Keramik und ein vom ersten Material (9) verschiedenes zweites Material (10) wie ein Metallpulver umfasst.

11. Verfahren nach Anspruch 10,
wobei eine Abscheidung (3) so ausgebildet wird, dass ein Teil der Abscheidung das erste Material (9) umfasst und ein zweiter Teil der Abscheidung das zweite Material (10) umfasst.

12. Verfahren nach Anspruch 10 oder 11,
wobei das erste Material (9) oder das zweite Material (10) ein Aluminium oder ein Spinell oder eine(s) von Ti₂AlN, Sc₂InC, Ti₂InC, Ti₂SnC, Zr₂InC, Zr₂TIN, Zr₂InN, Nb₂SnC, Hf₂SnC, Hf₂SnN, Hf₂SC, Ti₃AlC₂, Ti₃SiC₂, Ti₄AlN₃, Ta₄AlC₃, Nb₄AlC₃ oder eines von YAG, Zirconiumoxid, Siliziumkarbid, Siliziumnitrid, Polytetrafluorethylen, Titandioxyd, Titancarbid, Titannitrid, TiCN, Siliziumdioxid, Glas, Stahl, Gold, Messing, Bronze, Platin, Iridium oder Silber oder einer transparenten oder farbigen Keramik und/oder einer opaken oder transluzenten Keramik umfasst.

13. Verfahren nach einem der Ansprüche 10 bis 12, wobei das zweite Material (10) ein organisches Material oder metallische, keramische, organische Einschlüsse oder Edelsteine umfasst.

14. Verfahren nach einem der Ansprüche 1 bis 13,
wobei die Abscheidung (3) so ausgebildet wird, dass mindestens ein Material einen Zusammensetzungsgradienten umfasst.

15. Verfahren nach einem der Ansprüche 1 bis 14,
wobei die Abscheidung (3) eine Textur (14) umfasst.

16. Verfahren nach Anspruch 15,
wobei die Textur Dickenindikatoren (19) entspricht.

17. Verfahren nach einem der Ansprüche 1 bis 16,
wobei das Spritzen durch kontinuierliches oder diskontinuierliches Ändern der Zusammensetzung des mindestens einen Materials durchgeführt wird.

18. Verfahren nach einem der Ansprüche 1 bis 17,
wobei das Spritzen so durchgeführt wird, dass Kollisionen zwischen den Partikeln verursacht werden, bevor diese auf das Substrat (2) auftreffen.

19. Verfahren nach einem der Ansprüche 1 bis 17, wobei es sich bei der Komponente um eine Unruh (60) handelt.

## Claims

1. A method of manufacturing a watch component (3) comprising
providing a substrate (2), a deposition device (1) for depositing at least one material (9) on the substrate (2), and structuring means (4, 5) selected from a mold (4) and/or a mask (5), or a surface treatment, allowing to deposit said at least one material (9) selectively on the substrate (2);
projecting said at least one material to form a structured deposit (3) on the substrate (2) by means of the deposition device (1) and the structuring means (4, 5); and
separating the structured deposit (3) from the substrate (2) to obtain the watch component (20);
**characterized in that**
the step of projecting is carried out by the cold particle aerosol spraying process "Aerosol Deposition Method (ADM)", carried out at room temperature and without heat treatment, of said at least one material (9); and
in which the deposit has a thickness of at least 100 µm.

2. The process according to claim 1, wherein the deposit has a thickness of at least 200 µm.

3. The process according to claim 1, wherein the deposit has a thickness of between 250 µm and 1000 µm.

4. The process according to any one of claims 1 to 3, wherein the structuring means comprise a mold (4) which may comprise one or at least two levels, the mold (4) being provided with a mold shape (40) on an inner surface (41), the mold shape (40) corresponding to the negative contours of the watch component (20) to be produced.

5. The process according to claim 4, wherein the mold (4) has an undercut, the undercut being obtained by arranging a third mold level (4') on the first mold (4); and wherein the component (20) is manufactured by forming a first deposit (3) in the first mold (4), applying the third mold level (4') to the first mold (4), and forming a second deposit (3') in the third mold level (4').

6. The process according to any of claims 1 to 3, wherein the structuring means comprise a surface treatment (8) covering at least a portion of the substrate (2), the projected material (9) not adhering to the surface treatment (8).

7. The process according to any of claims 1 to 6, wherein the structuring means comprise a mask (5) placed between the deposition device (1) and the substrate (2), the mask (5) selectively allowing passage of said at least one projected material (9).

8. The process according to claim 7, wherein the surface of the mask (5) which is exposed to the projected material (9) comprises a surface treatment (7) to which the projected material (9) does not adhere.

9. The process according to claim 7 or 8 and claim 4 or 5, in which the mask (5) is used in combination with the mold (4) or in combination with a surface treatment (8) as claimed in claim 6.

10. The process according to any one of claims 1 to 9, wherein said at least one material comprises a first material (9) such as a ceramic and a second material (10) such as a metal powder, different from the first material (9).

11. The process according to claim 10, wherein a deposit (3) is formed such that a portion of the deposit comprises the first material (9) and a second portion of the deposit comprises the second material (10).

12. The process according to claim 10 or 11, wherein the first material (9) or the second material (10) comprises an alumina or spinel or one of Ti₂AlN, Sc₂InC, Ti₂InC, Ti₂SnC, Zr₂InC, Zr₂TlN, Zr₂InN, Nb₂SnC, Hf₂SnC, Hf₂SnN, Hf₂SC, Ti₃AlC₂, Ti₃SiC₂, Ti₄AlN₃, Ta₄AlC₃, Nb₄AlC₃, or one of YAG, zirconia, silicon carbide, silicon nitride, polytetrafluoroethylene, titanium dioxide, titanium carbide, titanium nitride, TiCN, silica, glass, steel, gold, brass, bronze, platinum, iridium or silver, or a transparent or colored ceramic and/or an opaque or translucent ceramic.

13. The process according to one of claims 10 to 12, in which the second material (10) comprises an organic material or metallic, ceramic, organic inclusions or precious stones.

14. The process according to any of claims 1 to 13, wherein the deposit (3) is formed such that at least one material comprises a composition gradient.

15. The process according to one of claims 1 to 14, wherein the deposit (3) comprises a texture (14).

16. The process according to claim 15, wherein the texture corresponds to thickness indicators (19).

17. The process according to any one of claims 1 to 16, wherein the projection is achieved by changing the composition of said at least one material in a continuous or discontinuous manner.

18. The process according to one of claims 1 to 17, in which the projection is carried out in such a way as to cause collisions between the particles before they impact the substrate (2).

19. The process according to one of claims 1 to 17, wherein the component is a pendulum (60).
